# EUROPEAN PATENT SPECIFICATION

(11) **EP 1 933 303 B1**
(45) Date of publication and mention of the grant of the patent: **06.08.2008**
(21) Application number: 06025974.4
(22) Date of filing: 14.12.2006
(51) Int. Cl.: G10L 15/22, G10L 15/20

(54) **Speech dialog control based on signal pre-processing**
Sprachdialogkontrolle basierend auf Signalvorverarbeitung
Contrôle de dialogue vocal basé sur un pré-traitement de signal

(43) Date of publication of application: 18.06.2008
(73) Proprietor: Harman Becker Automotive Systems GmbH, 76303 Karlsbad (DE)
(72) Inventor: Schmidt, Gerhard, 89081 Ulm (DE); König, Lars, 89075 Ulm (DE); Löw, Andreas, 89077 Ulm (DE)
(74) Representative: Grünecker, Kinkeldey, Stockmair & Schwanhäusser Anwaltssozietät

(56) References cited:
- EP-A- 1 695 873
- DE-C1- 19 533 541
- DE-C1- 19 956 747
- AUST H ET AL: "OVERVIEW OF THE PHILIPS DIALOG SYSTEM" PROCEEDINGS OF THE DARPA BROADCAST NEWS TRANSCRIPTION AND UNDERSTANDING WORKSHOP, February 1998 (1998-02), page COMPLETE, XP002142224

## Description

### Field of Invention

The present invention relates to speech dialog systems and speech control systems comprising speech recognition means. In particular, the present invention relates to an improved speech dialog control achieved by a pre-processing and analysis of speech input signals.

### Background of the invention

Speech recognition systems, i.e. apparatus for converting an acoustic signal to a sequence of words or strings, become increasingly prevalent nowadays. In the last years due to dramatic improvement in speech recognition technology, high performance speech analyzing, recognition algorithms and speech dialog systems have been made available. Present day speech input capabilities comprise voice dialing, call routing, document preparation, etc. Speech recognizing systems usually choose the guess for an orthographic representation of a spoken word or sentence that corresponds to sampled acoustic signals from a finite vocabulary of words that can be recognized and are stored, for example, as data lists.

Speech dialog systems are particularly useful, since they offer a most natural kind of interaction between an operator and some operation device. The reliability of the correct speech recognition of a verbal utterance of an operator as well as reasonable synthesized speech outputs that are semantically meaningful in the actual context are main tasks in the art of speech dialog systems and still raise demanding problems for engineers. A speech dialog system can, e.g., advantageously be employed in a car to allow the user to control different devices such as a mobile phone, a car radio, a navigation system and/or an air condition.

In order to improve speech recognition results the input speech signals that have to be recognized are usually subject to some signal pre-processing including noise reduction and echo compensation.

Several methods for echo compensation have been proposed and implemented in communication systems in interior rooms, e.g., vehicle compartments, in recent years. Adaptive filters are employed for echo compensation of acoustic signals that are used to model the transfer function (impulse response) of the loudspeaker-room-microphone - system by means of an adaptive finite impulse response (FIR) filter. Similarly, in the art of noise reduction adaptive filters, e.g., Wiener filters, are employed that suppress background noise in which the wanted speech signal is embedded, e.g., on the basis of the short-time power density of the noise and the speech signal.

DE 195 33 541 C1 discloses a method for speech control and speech dialog comprising signal pre-processing to obtain an enhanced speech input signal and wherein the volume of a synthesized speech output can be controlled depending on the ambient noise detected during speech pauses.

However, despite the engineering process in recent years current speech recognition is still not satisfying and sufficiently reliable enough for practical applications in the case of noisy environment as, e.g., in vehicle compartments. If speech recognition fails, the operation of a speech dialog system is necessarily deteriorated. For example, annoying repetitions of synthesized demands for user's confirmations of actions to be taken may result from insufficient recognition or even severe malfunctions may occur which negatively affect the acceptance of the speech dialog system by the consumer.

It is therefore an object of the present invention to provide a speech dialog system that shows an improved and more reliable functionality as compared to the art and that allows for a smoother and faster human-machine interaction.

### Description of the Invention

The above-mentioned problem is solved by a speech dialog system according to claim 1 in which information is used for the control of a synthesized speech output that was previously not used in the art. Thereby, the machine can interact with a human operator in order to improve the reliability of recognition results. The claimed speech dialog system comprises
a signal pre-processing means configured to process a speech input signal to obtain an enhanced speech signal and to output an analysis signal including information on a) background noise present in the speech input signal and/or b) an echo component present in the speech input signal and/or c) the localization of a source of the speech input signal and/or d) the speech level of the speech input signal and/or e) the pitch of the speech input signal and/or f) the stationarity of the speech input signal;
a speech recognition means configured to receive the enhanced speech signal and to obtain a recognition result based on the received enhanced speech signal;
a speech output means configured to output a synthesized speech output in response to the recognition result; and
a control means configured to receive the analysis signal and to control the speech output means on the basis of the received analysis signal;
characterized in that the control means is also configured to control the signal prepocessing means on the basis of the recognition result.

Whereas the speech recognition means is configured to receive the enhanced speech signal and to obtain a recognition result based on the received enhanced speech signal the analysis signal is not used to obtain the recognition result. The analysis signal may, in particular, include only the information given in one or more of the points a) to f) above. The analysis signal may, e.g., comprise a real number between 0 and 1 representing some probability measure for one of the properties (noise, echo, speech level) of the speech signal indicating that probably the operator should speak louder in order to improve the reliability of speech recognition result, etc.

It is to be understood that the speech input signal includes some background noise and possibly an echo contribution in addition to the wanted signal representing the utterance of a local speaker. Furthermore, the speech dialog system may be configured to operate as a speech control system controlling operation of separate devices by voice control.

Contrary to the speech dialog systems in the art that only make use of the recognition results for the interaction with a user, according to the present invention the synthesized speech output of the speech dialog system depends on the analysis of, e.g., the background noise and echo present in the speech input signal. If, e.g., the noise level exceeds a predetermined level the volume of the synthesized speech output is raised (for details see description below). If, e.g., the speech level (volume of the wanted signal) is below a predetermined threshold the speech output may prompt a demand to the operator for speaking louder in order to guarantee a reliable recognition result. The analysis of the noise and the speech level may advantageously be performed for the already processed speech signal that has been subject to filtering by a noise reduction filtering means and/or echo compensation filtering means.

Since according to the present invention information other than semantic information is additional used for the dialog speech control, the human-machine dialog is more successful and convenient for the operator as compared to the art. The speech dialog system can react on changes in the environment and the gender or age of the operator (as determined by means of an analysis of the pitch) and is, thus, enabled to perform a more appropriate dialog.

Different from the art the speech dialog control and the signal pre-processing means interact with each other. In particular, the interaction can be two-sided. The control means of the speech dialog system is configured to control the signal pre-processing in order to further improve the human-machine dialog. The control can be performed on the basis of the semantic context of the actual dialog. If, e.g., it is to be expected that the operator of the speech dialog system will change position, the filter coefficients of an echo compensation filtering means employed in the pre-processing means have to be re-adapted. The speech dialog control can send an according control signal to the echo compensation filtering means (see description below).

The control means of the speech dialog system according to another example may also be configured to control the speech recognition means. Again, the control can be performed on the basis of the semantic context of the actual dialog in order to improve the reliability of the recognition process. In response to a particular kind of speech input that can be expected in an actual dialog situation, e.g., the choice of code books among a number of different available code books that are used for the actual speech recognition process can be controlled.

The signal pre-processing means in the above example may comprise a noise reduction filtering means configured to determine background noise that is present in the speech input signal and/or an echo compensation filtering means configured to determine an echo component that is present in the speech input signal. By these filtering means the quality of the speech input signal is enhanced. The filter coefficients of the filtering means can be adapted in response to a control signal received from the speech dialog control. Analysis of the enhanced speech input signal in order to obtain the analysis signal might be preferred.

In one embodiment the speech dialog system comprises multiple microphones. At least one of these microphones may preferably be a directional microphone. The microphones may be arranged in a microphone array. The signal pre-processing means in the speech dialog system comprising multiple microphones also comprises a beamforming means configured to provide information on the localization of a source of the speech input signal, i.e. an operator of the speech dialog system.

By the beamforming means microphone signals obtained by the individual microphones, e.g., the microphones of the above-mentioned microphone array, are beamformed to obtain a beamformed microphone (speech) signal that is processed for speech recognition. The location of the speaker/operator of the speech dialog system is determined on the basis of the difference in signal transit time of microphone signals of the individual microphones.

Beamforming comprises amplification of microphone signals corresponding to audio signals detected from a wanted signal direction by equal phase addition and attenuation of microphone signals corresponding to audio signals generated at positions in other direction. The beamforming might be performed by a fixed beamformer or an adaptive beamformer characterized by a permanent adaptation of processing parameters such as filter coefficients during operation (see e.g., "Adaptive beamforming for audio signal acquisition", by Herbordt, W. and Kellermann, W., in "Adaptive signal processing: applications to real-world problems", p.155, Springer, Berlin 2003).

The synthesized speech output generated by the speech dialog system may partly depend on the direction of the speaker. If the operator, e.g., wants some positional information on a particular object, the speech dialog system can provide him with the information by left/right/before/behind indications in dependence on the determined position of the speaker which, again, results in a more satisfying human-machine interaction. Other information that can be provided by the speech dialog system when directional information is available include indications as "On your left/right you see/find ..", etc.

The speech dialog system may also comprise a means for determining the speech level of the speech input signal and/or the pitch of the speech input signal. The dialog can be performed partly depending on the speech level (volume) and the gender/age of the operator (as deduced from the pitch). Moreover, the speech dialog system may determine the stationarity of the speech input signal which comprises background noise. For example, it could be detected that some non-stationary portion of the noisy speech signal is caused by a perturbation source that can be identified by the speech dialog system (e.g., by a comparison of the non-stationary signal portion with noise samples stored in a database). In this case, the speech dialog system may prompt the operator to eliminate or switch-off the perturbation.

The inventive speech dialog system may further comprise an operating means configured to actuate a mechanical element, in particular, a mechanical element of a vehicle (inside or outside the vehicle compartment), or to operate an electronic device separate from the speech dialog system, in particular, a display means in which case the control means is configured to control the operating means. In other words, the speech dialog system may include the functioning of a speech control system by which some device is operated by voice. The control means, in particular, controls the operating means in response to the recognition result obtained by the speech recognition means. It additionally controls the operating means on the basis of the analysis signal.

If, e.g., the speech dialog system comprising the above-mentioned operating means as well as the above-mentioned beamforming means is installed in a vehicle, a command by an operator can be responded to in dependence on the location of the speaker. When a driver simply utters "Seat heater on", the seat heater of the driver's seat can be operated by the speech dialog system via the operation means without any demand for a specification which one of the seat heaters shall be switched on, when it is provided with information on the location of the actual speaker/operator of the speech dialog system.

Moreover, the operator may ask that some information he is interested in is displayed on a display device. If there are more than one display devices in the room where the speech dialog system is installed the display device next to the speaker can be activated by the operation means, when the speech dialog system is provided with information on the location of the actual speaker. Similarly, on a single multi-display monitor information may be represented only on a display in the line of sight of the speaker.

The inventive speech dialog system is of particular use in vehicles like automobiles. The present invention also provides a vehicle, in particular, an automobile, in which one of the above examples of the inventive speech dialog system is installed.

The above-mentioned object is also achieved by a method for controlling a human-machine dialog in the context of a speech dialog system operated by a human operator, comprising the steps of detecting a speech signal representing an utterance by a speaker (a speaking person, an operator);
processing the detected speech signal to obtain an enhanced speech signal;
analyzing the speech signal or the enhanced speech signal to output an analysis signal including information on a) background noise present in the speech input signal and/or b) an echo component present in the speech input signal and/or c) the localization of a source of the speech input signal and/or d) the speech level of the speech input signal and/or e) the pitch of the speech input signal and/or f) the stationarity of the speech input result;
recognizing the enhanced speech signal to obtain a recognition signal;
outputting a synthesized speech output based on the recognition signal;
wherein
the outputting of the synthesized speech output is controlled on the basis of the analysis signal;
characterized in that the pocessing of the detected speech input signal is controlled on the basis of the recognition result.

If, e.g., the analysis signal comprises information on a rather high noise level, the synthesized speech output may comprise a demand to the speaker to speak louder or to take measures against the noise (see discussion above). If, on the other hand, perturbations are below thresholds, a speech output means may be controlled to answer a question asked by the operator.

Thus, according to one advantageous embodiment the method for controlling a human-machine dialog comprises determining whether a background noise level of the background noise present in the speech signal exceeds a first predetermined threshold or whether an echo level of the echo component present in the speech signal exceeds a second predetermined threshold and in this embodiment the synthesized speech output comprises a demand to the speaker to speak louder and/or slower, if the first and/or the second predetermined threshold is exceeded (by the background noise level or the echo level, respectively).

Similarly, according to another example the method for controlling a human-machine dialog comprises determining whether a background noise level of the background noise present in the speech signal exceeds a first predetermined threshold or whether an echo level of the echo component present in the speech signal exceeds a second predetermined threshold and the volume of the synthesized speech output is increased and/or the speed of the synthesized speech output is decreased, if the first and/or the second predetermined threshold is exceeded.

The (kind of) processing of the detected speech signal can be influenced / controlled by the recognition signal. One recognition process may be controlled by a recognition result obtained in a previous recognition process.

According to another embodiment, the method for controlling a human-machine dialog (and thereby a human-machine interaction, in general) further comprises outputting a control signal to an actuator of a mechanical element or to an electronic device based on the recognition signal and the analysis signal. If, e.g., it is recognized that the operator, uttered the command "Adjust left mirror" the mirror left to the operator can be actuated based on information on the location of the operator (e.g., obtained with the help of a beamforming means).

In the inventive method the processing of the speech input signal to obtain an enhanced speech signal may comprise filtering the speech input signal by a noise reduction filtering means and/or an echo compensation filtering means.

The speech input signal may be a beamformed one obtained from multiple microphone signals and the localization of the source of the speech input signal may be obtained with the help of a beamforming means. The beamforming means can provide information on the direction of the operator of a speech dialog system and also in the direction of a perturbation source. This information is used for improvement of the human-machine dialog.

The present invention, moreover, provides a computer program product comprising one or more computer readable media having computer-executable instructions for performing the steps of one of the above examples of the herein disclosed method for controlling a human-machine dialog.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates a speech dialog control in a speech dialog system according to the prior art.

Figure 2 illustrates an example of the inventive speech dialog control including some interaction of signal pre-processing and speech dialog control.

Figure 3 illustrates an example for controlling the speech output based on the analysis results for a noisy speech signal.

Figure 4 illustrates an example for the control of an echo compensation filtering means in response to a recognized speech signal.

In the art, a speech dialog system basically operates as follows. A speech input means 1' comprising one or more microphones receives a speech signal. A speech signal x(n), where n denotes the discrete time index, usually comprises the wanted signal representing a detected utterance of a local speaker and also some background noise and an echo contribution. The echo contribution may be due to a loudspeaker signal detected by the microphone(s). The loudspeaker signal can, e.g., represents a synthesized speech output of the speech dialog system.

The input speech signal is processed by a signal pre-processing means 2'. Pre-processing usually comprises noise reduction and echo compensation of the speech signal thereby resulting in an enhanced speech signal.

The enhanced digital speech signal is input in a speech recognition means 3' where it may be subject to a spectral analysis, for example. Recent representations of the speech waveforms that are typically sampled at a rate between 6.6 kHz and 20 kHz are derived from the short term power spectra and represent a sequence of characterizing vectors containing values of what is generally referred to as features/feature parameters. The values of the feature parameters are used in succeeding stages in the estimation of the probability that the portion of the analyzed waveform corresponds to, for example, a particular entry, i.e. a word, in a vocabulary list that is stored in a database of the speech dialog system.

The speech recognition means 3' usually makes use of a concatenation of allophones that constitute a linguistic word. The allophones are typically represented by Hidden Markov Models (HMM) that are characterized by a sequence of states each of which has a well-defined transition probability. In order to recognize a spoken word, the systems have to compute the most likely sequence of states through the HMM. This calculation is usually performed by means of the Viterbi algorithm, which iteratively determines the most likely path through the associated trellis.

A speech dialog control 4' receives the recognition result obtained by the speech recognition means 3'. In response to the recognition result, the speech dialog control 4' controls a speech output 5' to output synthesized speech. If, e.g., the speech recognition means 3' recognized a question asked by a speaker, the speech dialog control 4' may cause the speech output 5' to give an answer in response to the recognized question.

In the art, there is no interaction between the signal pre-processing means 2' and the speech dialog control 4'. In particular, in the art any information other than the one used to recognize the semantic content of the input speech signal by the speech recognition means 3' is of no use for the dialog between an operator and the speech dialog system. Information on the noise background noise, for example, is not used to improve the human-machine dialog.

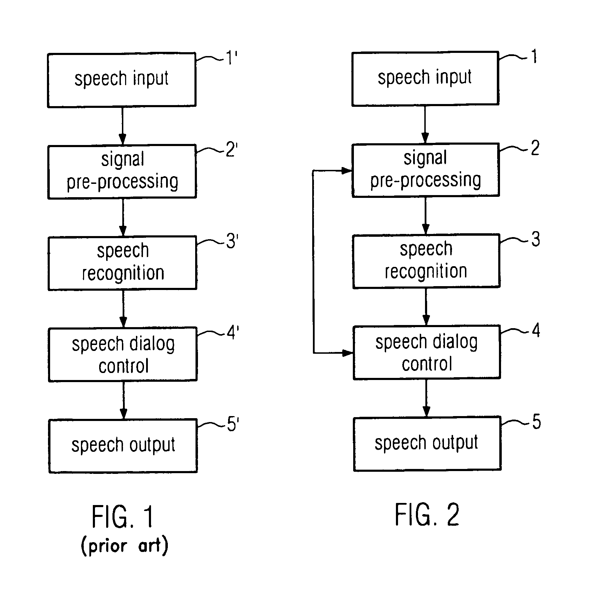

As shown in Figure 2 according to the present invention the signal pre-processing means 2 and the speech dialog control 4 directly communicate with each other. It may be preferred that this communication is only enabled on demand by a user or is automatically established by the speech dialog system whenever it is operated.

The signal pre-processing means 2 according to an embodiment of the present invention comprises means for extracting the power density spectrum of the speech input signal and to average this spectrum over a predetermined frequency range of, e.g., 500 Hz to 5000 Hz. Additionally, the spectrum is smoothed in time but only for signal portions that actually include the wanted speech contribution. By the thus determined averaged and smoothed spectrum the speech level (relative volume of the wanted signal) is obtained.

The information about the speech level is provided to the speech dialog control 4. According to this embodiment the speech output 5 prompts the user to speak louder, e.g., by a synthesized speech output: "Please speak louder", if the speech level lies below a predetermined level. The speech dialog system may also ask to eliminate a noise source (e.g., by a synthesized speech output: "Please close window"). Thus, if some malfunction of the speech dialog system is to be expected due to a low speech level (and accordingly due to a somewhat unreliable speech recognition, the speech dialog system can interact with the user in a way to improve the intelligibility of the user's utterances.

According to another example, the signal pre-processing means 2 includes a means for extracting the (voice) pitch frequency of the speech input signal. The determined instantaneous pitch frequency is averaged over a predetermined time interval. The averaged pitch is used for an estimation of the gender and/or age of the speaker. For example, if an averaged pitch frequency of < 150 Hz is detected, it is decided that the speaker is male and otherwise it is decided that the speaker is female or that the speaker is a child (for a pitch frequency of above 300 Hz). The actual continuation of the speech dialog by the speech dialog system depends on the classification of the speaker. In particular, some child safety means may be activated, if the means for extracting the pitch frequency decides that the pitch frequency lies above 300 Hz, i.e. the actual speaker is a child.

According to another embodiment it is detected whether the speech signal exhibits significant time variations. In particular, it may be decided whether the speech signal has non-stationary contributions of perturbations stemming from a direction different from the one of the source of the wanted signal, i.e. the location of the speaker). The non-stationary contributions may include utterances by other persons that are not actually operating the speech dialog system. The direction of the source of the perturbations and the speaker can be determined by means of a beamforming means being part of the signal pre-processing means.

If such non-stationary perturbations above a predetermined level are detected and information on this fact is provided to the speech dialog control, the speech output may prompt the user with a warning that speech recognition might fail. It is also possible to identify non-stationary verbal perturbations caused by a second speaker and in this case the speech dialog system may ask the second speaker to wait for the completion of the human-machine interaction carried out with the first speaker.

In another example, the signal pre-processing means 2 of the invention comprises an adaptive noise reduction filtering means. The noise reduction filtering means determines the instantaneous power density spectrum of the speech signal and the power density spectrum of the background noise that is present in the speech signal in order to adapt the filter coefficients appropriately. By averaging the power density spectrum of the background noise a mean noise level is obtained and provided by the signal pre-processing means 2 to the speech dialog control 4.

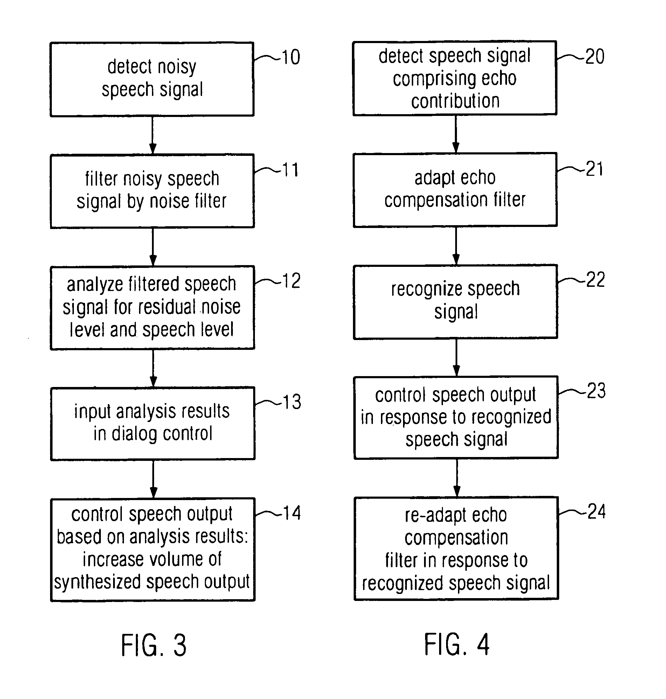

Figure 3 shows steps of an example of the inventive method in which a noise level is determined. First, a noisy speech signal is detected 10 by one or more microphones. The noisy speech signal is filtered 11 by an adaptive noise filtering means. The noise filtering means may, e.g., employ a Wiener filter. The filtered signal (or alternatively the detected non-filtered speech signal) is analyzed 12 for a residual noise level (or a noise level present in the non-filtered signal). Moreover, the speech level can be determined (s. above).

The result of the analysis is input in the speech dialog control 13 and the output of synthesized speech is controlled on the basis of this result 14. If the noise level exceeds a predetermined level, the speech output 5 of Figure 2 can be controlled to output synthesized speech with an appropriate volume in order to be understood by the user. Moreover, the entire user-machine dialog can be controlled to be carried out slower that standard in order to improve the reliability of the recognition result obtained by the speech recognition means 3 of Figure 2 in a noisy environment. The user may be asked to speak more slowly and/or the speed of the synthesized speech output may be adapted in accordance with the detected noise level and/or speech level.

The communication between the signal pre-processing means 2 and the speech dialog control 4 can be two-sided, i.e. the speech dialog control 4 can control the signal pre-processing means 2, e.g., by modifying filter coefficients of filtering means being part of the signal pre-processing means 2. According to an example (see Figure 4), a speech signal comprising some echo contribution is detected 20. The echo contribution may be caused by a loudspeaker output, in particular, a synthesized speech output, in a loudspeaker-room-microphone system (LRM). Filter coefficients of an echo compensation filtering means are adapted 21 in order to estimate the impulse response of the LRM and to subtract an estimate for the echo from the speech signal. The echo compensation filtering means may be a finite impulse response (FIR) filter adapted by the Normalized Least Mean Square algorithm as it is known in the art.

The echo compensated speech signal is further processed for speech recognition 22. In response to the recognition result, a synthesized speech output is generated by the speech dialog system 23. In addition, a control signal is sent to the echo compensation filtering means in response to the recognition result. Any significant movement of the speaker results in a change of the actual impulse response of the LRM. Thus, when it is determined that some movement of the speaker is to be expected this information can be used for controlling the echo compensation filtering means. Thereby, some "freezing" of the filter coefficients of the echo compensation filtering means can efficiently be avoided.

More specifically, consider a situation in which an operator of the speech dialog (and control) system installed in a vehicle compartment intends to operate some device, e.g., a seat heater or a mirror. He may utter "Seat heater" or "Right exterior mirror". The corresponding speech signal is detected, pre-processed as mentioned above and recognized by the speech dialog system. After having recognized the user's command the speech dialog system may prompt: "Please operate illuminated switch to the left". It is very probable that the speaker will move to the left to operate switch. Consequently, the echo compensation filtering means is controlled to re-adapt the filter coefficients 24 in response to the temporal change of the LRM caused by the speaker's movement. In the case of an operation of an actuator configured to move the seat in response to the recognition result and a corresponding control signal from the speech dialog system, a similar operation of the speech dialog system can advantageously be implemented.

According to another example, the speech dialog system can estimate the probability that the operator might start speaking shortly. If, e.g., a synthesized speech output represents an answer to a question previously asked by the operator of the speech dialog system, it is rather probable that the operator will speak again (depending on the kind of answer). If, on the other hand, the synthesized speech output takes relatively long there is an increasing probability during the synthesized speech output that the operator might interrupt the speech output by barging-in.

The speech dialog control may provide the signal pre-processing means by information on this probability. Thresholds of a noise reduction filtering means and an echo compensation filtering means as well as a residual echo compensation filter can be adapted in accordance with the probability that the operator might start speaking. Adaptation steps for the filter coefficients of the echo compensation filtering means might also be controlled in accordance with the expectation of some barge-in.

It is noted that, in general, in the above examples the information exchanged by the signal pre-processing means and the speech dialog control can be represented by probability measures. The exchanged signals may, thus, represent real numbers that are normalized to the interval [0, 1].

All previously discussed embodiments are not intended as limitations but serve as examples illustrating features and advantages of the invention. It is to be understood that some or all of the above described features and embodiments can also be combined in different ways.

## Claims

1. Speech dialog system comprising
a signal pre-processing means configured to process a speech input signal to obtain an enhanced speech signal and to output an analysis signal including information on a) background noise present in the speech input signal and/or b) an echo component present in the speech input signal and/or c) the localization of a source of the speech input signal and/or d) the speech level of the speech input signal and/or e) the pitch of the speech input signal and/or f) the stationarity of the speech input signal;
a speech recognition means configured to receive the enhanced speech signal and to obtain a recognition result based on the received enhanced speech signal;
a speech output means configured to output a synthesized speech output in response to the recognition result; and
a control means configured to receive the analysis signal and to control the speech output means on the basis of the received analysis signal;
**characterized in that**
the control means is also configured to control the signal pre-processing means on the basis of the recognition result.

2. The speech dialog system according to claim 1, wherein the control means is also configured to control the speech recognition means.

3. The speech dialog system according to one of the preceding claims, wherein the signal pre-processing means comprises a noise reduction filtering means configured to determine background noise present in the speech input signal and/or an echo compensation filtering means configured to determine an echo component present in the speech input signal.

4. The speech dialog system according to one of the preceding claims, further comprising
multiple microphones, in particular, arranged in a microphone array and comprising at least one directional microphone, and wherein the signal pre-processing means comprises a beamforming means configured to provide information on the localization of a source of the speech input signal.

5. The speech dialog system according to one of the preceding claims, wherein the signal pre-processing means comprises a means for determining the speech level of the speech input signal and/or the pitch of the speech input signal.

6. The speech dialog system according to one of the preceding claims, wherein the signal pre-processing means comprises a means for determining the stationarity of the speech input signal.

7. The speech dialog system according to one of the preceding claims, further comprising
an operating means configured to actuate a mechanical element, in particular, a mechanical element of a vehicle, or to operate an electronic device separate from the speech dialog system, in particular, a display means; and wherein
the control means is configured to control the operating means.

8. Method for controlling a human-machine dialog comprising the steps of
detecting a speech input signal representing an utterance by a speaker;
processing the detected speech input signal to obtain an enhanced speech signal;
analyzing the speech input signal or the enhanced speech signal to output an analysis signal including information on a) background noise present in the speech input signal and/or b) an echo component present in the speech input signal and/or c) the localization of a source of the speech input signal and/or d) the speech level of the speech input signal and/or e) the pitch of the speech input signal and/or f) the stationarity of the speech input signal;
recognizing the enhanced speech signal to obtain a recognition signal;
outputting a synthesized speech output based on the recognition result; wherein
the outputting of the synthesized speech output is controlled on the basis of the analysis signal;
**characterized in that**
the processing of the detected speech input signal is controlled on the basis of the recognition result.

9. The method according to claim 8, comprising
determining whether a background noise level of the background noise present in the speech signal exceeds a first predetermined threshold or whether an echo level of the echo component present in the speech signal exceeds a second predetermined threshold; and wherein
the synthesized speech output comprises a demand to the speaker to speak louder and/or slower, if the first and/or the second predetermined threshold is exceeded.

10. The method according to claim 8 or 9, comprising
determining whether a background noise level of the background noise present in the speech signal exceeds a first predetermined threshold or whether an echo level of the echo component present in the speech signal exceeds a second predetermined threshold; and wherein
the volume of the synthesized speech output is increased and/or the speed of the synthesized speech output is decreased, if the first and/or the second predetermined threshold is exceeded.

11. The method according to one of the claims 8-10, further comprising outputting a control signal to an actuating means configured to actuate a mechanical element or to an electronic device based on the recognition signal and the analysis signal.

12. The method according to one of the claims 8-11, wherein the processing of the speech input signal to obtain an enhanced speech signal comprises filtering the speech input signal by a noise reduction filtering means and/or an echo compensation filtering means.

13. The method according to one of the claims 8-12, wherein the speech input signal is beamformed and the localization of the source of the speech input signal is obtained by a beamforming means.

14. Computer program product, comprising one or more computer readable media having computer-executable instructions for performing the steps of the method according to one of the claims 8-13.

## Patentansprüche

1. Sprachdialogsystem, das umfasst
eine Signalvorverarbeitungseinrichtung, die dazu ausgebildet ist, ein Spracheingangssignal zu verarbeiten, um ein verbessertes Sprachsignal zu erhalten, und ein Analysesignal auszugeben, das Informationen einschließt über a) Hintergrundgeräusch, das in dem Spracheingangssignal vorhanden ist und/oder b) eine Echokomponente, die in dem Spracheingangssignal vorhanden ist und/oder c) die Lokalisierung einer Quelle des Spracheingangssignals und/oder d) den Sprachpegel des Spracheingangssignals und/oder e) die Tonhöhe des Spracheingangssignals und/oder f) die Stationarität des Spracheingangssignals;
eine Spracherkennungseinrichtung, die dazu ausgebildet ist, das verbesserte Sprachsignal zu empfangen und ein Erkennungsergebnis auf der Grundlage des empfangenen verbesserten Sprachsignals zu gewinnen;
eine Sprachausgabeeinrichtung, die dazu ausgebildet ist, eine synthetisierte Sprachausgabe in Reaktion auf das Erkennungsergebnis auszugeben; und
eine Steuereinrichtung, die dazu ausgebildet ist, das Analysesignal zu empfangen und die Sprachausgabeeinrichtung auf der Grundlage des empfangenen Analysesignals zu steuern;
**dadurch gekennzeichnet, dass**
die Steuereinrichtung ebenso dazu ausgebildet ist, die Signalvorverarbeitungseinrichtung auf der Grundlage des Erkennungsergebnisses zu steuern.

2. Das Sprachdialogsystem gemäß Anspruch 1, in dem die Steuereinrichtung ebenso dazu ausgebildet ist, die Spracherkennungseinrichtung zu steuern.

3. Das Sprachdialogsystem gemäß einem der vorhergehenden Ansprüche, in dem die Signalvorverarbeitungseinrichtung eine Geräuschverringerungsfiltereinrichtung, die dazu ausgebildet ist, Hintergrundgeräusch zu bestimmen, das in dem Spracheingangssignal vorhanden ist, und/oder eine Echokompensationsfiltereinrichtung, die dazu ausgebildet ist, eine Echokomponente zu bestimmen, die in dem Spracheingangssignal vorhanden ist, umfasst.

4. Das Sprachdialogsystem gemäß einem der vorhergehenden Ansprüche, das weiterhin umfasst
mehrere Mikrofone, die insbesondere in einer Mikrofonanordnung angeordnet sind und zumindest ein Richtmikrofon umfassen, und in dem die Signalvorverarbeitungseinrichtung eine Beamformer - Einrichtung umfasst, die dazu ausgebildet ist, Informationen über die Lokalisierung der Quelle des Spracheingangssignals zur Verfügung zu stellen.

5. Das Sprachdialogsystem gemäß einem der vorhergehenden Ansprüche, in dem die Signalvorverarbeitungseinrichtung eine Einrichtung zum Bestimmen des Sprachpegels des Spracheingangssignals und/oder der Tonhöhe des Spracheingangssignals umfasst.

6. Das Sprachdialogsystem gemäß einem der vorhergehenden Ansprüche, in dem die Signalvorverarbeitungseinrichtung eine Einrichtung zum Bestimmen der Stationarität des Spracheingangssignals umfasst.

7. Das Sprachdialogsystem gemäß einem der vorhergehenden Ansprüche, das weiterhin umfasst
eine Bedieneinrichtung, die dazu ausgebildet ist, ein mechanisches Element, insbesondere ein mechanisches Element eines Fahrzeugs zu bedienen, oder eine elektronische Einrichtung, insbesondere eine Anzeigeeinrichtung, zu bedienen, die von dem Sprachdialogsystem verschieden ist, und in dem
die Steuereinrichtung, dazu ausgebildet ist, die Bedieneinrichtung zu steuern.

8. Verfahren zum Steuern eines Mensch - Maschine - Dialogs, das die Schritte umfasst
Detektieren eines Spracheingangssignals, das eine Äußerung eines Sprechers darstellt;
Verarbeiten des detektierten Spracheingangssignals, um ein verbessertes Sprachsignal zu erhalten;
Analysieren der Spracheingangssignals oder des verbesserten Sprachsignals, um ein Analysesignal auszugeben, das Informationen einschließt über a) Hintergrundgeräusch, das in dem Spracheingangssignal vorhanden ist und/oder b) eine Echokomponente, die in dem Spracheingangssignal vorhanden ist und/oder c) die Lokalisierung einer Quelle des Spracheingangssignals und/oder d) den Sprachpegel des Spracheingangssignals und/oder e) die Tonhöhe des Spracheingangssignals und/oder f) die Stationarität des Spracheingangssignals;
Erkennen des verbesserten Sprachsignals, um ein Erkennungssignal zu gewinnen;
Ausgeben einer synthetisierten Sprachausgabe auf der Grundlage des Erkennungsergebnisses, wobei
das Ausgeben der synthetisierten Sprachausgabe auf der Grundlage des Analysesignals gesteuert wird;
**dadurch gekennzeichnet, dass**
das Verarbeiten des detektierten Spracheingangssignals auf der Grundlage des Erkennungsergebnisses gesteuert wird.

9. Das Verfahren gemäß Anspruch 8, das umfasst
Bestimmen, ob ein Hintergrundgeräuschniveau des Hintergrundgeräuschs, das in dem Spracheingangssignal vorhanden ist, eine erste vorbestimmte Schwelle überschreitet, oder ob ein Echoniveau der Echokomponente, die in dem Spracheingangssignal vorhanden ist, eine zweite vorbestimmte Schwelle überschreitet; und in dem
die synthetisierte Sprachausgabe eine Anforderung an den Sprecher umfasst, lauter und/oder langsamer zu sprechen, wenn die erste und/oder die zweite vorbestimmte Schwelle überschritten wird.

10. Das Verfahren gemäß Anspruch 8 oder 9, das umfasst
Bestimmen, ob ein Hintergrundgeräuschniveau des Hintergrundgeräuschs, das in dem Spracheingangssignal vorhanden ist, eine erste vorbestimmte Schwelle überschreitet, oder ob ein Echoniveau der Echokomponente, die in dem Spracheingangssignal vorhanden ist, eine zweite vorbestimmte Schwelle überschreitet; und in dem
die Lautstärke der synthetisierten Sprachausgabe erhöht wird und/oder die Geschwindigkeit der synthetisierten Sprachausgabe verringert wird, wenn die erste und/oder die zweite vorbestimmte Schwelle überschritten wird.

11. Das Verfahren gemäß einem der Ansprüche 8 - 10, das weiterhin das Ausgeben eines Steuersignals an eine Bedieneinrichtung, die dazu ausgebildet ist, ein mechanisches Element zu bedienen, oder an eine elektronische Einrichtung auf der Grundlage des Erkennungssignals und des Analysesignals umfasst.

12. Das Verfahren gemäß einem der Ansprüche 8 - 11, in dem die Verarbeitung des Spracheingangssignals dazu, ein verbessertes Sprachsignal zu erhalten, das Filtern des Spracheingangssignal mit einer Geräuschverringerungsfiltereinrichtung und/oder einer Echokompensationsfiltereinrichtung umfasst.

13. Das Verfahren gemäß einem der Ansprüche 8 - 12, in dem das Spracheingangssignal gebeamformt wird und die Lokalisierung der Quelle des Spracheingangssignals mit eine Beamformer - Einrichtung erreicht wird.

14. Computerprogrammprodukt, das ein oder mehrere computerlesbare Medien umfasst, die computerausführbare Anweisungen zum Ausführen der Schritte des Verfahrens gemäß einem der Ansprüche 8-13 besitzen.

## Revendications

1. Système de dialogue vocal comprenant :
des moyens de pré-traitement de signal qui sont configurés pour traiter un signal d'entrée de parole de façon à obtenir un signal de parole amélioré et à délivrer en sortie un signal d'analyse contenant des informations sur : a) un bruit de fond présent dans le signal d'entrée de parole ; et/ou b) une composante d'écho présente dans le signal d'entrée de parole ; et / ou c) la localisation d'une source du signal d'entrée de parole ; et / ou d) le niveau vocal du signal d'entrée de parole ; et/ou e) la hauteur tonale du signal d'entrée de parole ; et / ou f) la stationnarité du signal d'entrée de parole ;
des moyens de reconnaissance de la parole qui sont configurés pour recevoir le signal de parole amélioré et pour obtenir un résultat de reconnaissance basé sur le signal de parole amélioré reçu ;
des moyens de sortie de parole qui sont configurés pour délivrer une sortie de parole synthétisée en réponse au résultat de la reconnaissance ; et
des moyens de commande qui sont configurés pour recevoir le signal d'analyser et pour commander les moyens de sortie de parole sur la base du signal d'analyse reçu ;
**caractérisé en ce que**
les moyens de commande sont également configurés pour commander les moyens de pré-traitement de signal sur la base du résultat de la reconnaissance.

2. Système de dialogue vocal selon la revendication 1, dans lequel les moyens de commande sont également configurés pour commander les moyens de reconnaissance de la parole.

3. Système de dialogue vocal selon l'une quelconque des revendications précédentes, dans lequel les moyens de pré-traitement de signal comprennent des moyens de filtrage et de réduction de bruit qui sont configurés pour déterminer un bruit de fond présent dans le signal d'entrée de parole, et / ou des moyens de filtrage et de compensation d'écho qui sont configurés pour déterminer une composante d'écho présente dans le signal d'entrée de parole.

4. Système de dialogue vocal selon l'une quelconque des revendications précédentes, comprenant par ailleurs :
une pluralité de microphones disposés, en particulier, sous la forme d'un ensemble de microphones et comprenant au moins un microphone directionnel, et dans lequel les moyens de pré-traitement de signal comprennent des moyens de formation de faisceau qui sont configurés pour fournir des informations relatives à la localisation d'une source du signal d'entrée de parole.

5. Système de dialogue vocal selon l'une quelconque des revendications précédentes, dans lequel les moyens de pré-traitement de signal comprennent des moyens pour déterminer le niveau vocal du signal d'entrée de parole et / ou la hauteur tonale du signal d'entrée de parole.

6. Système de dialogue vocal selon l'une quelconque des revendications précédentes, dans lequel les moyens de pré-traitement de signal comprennent des moyens pour déterminer la stationnarité du signal d'entrée de parole.

7. Système de dialogue vocal selon l'une quelconque des revendications précédentes, comprenant par ailleurs :
des moyens d'actionnement qui sont configurés pour actionner un élément mécanique, en particulier, un élément mécanique d'un véhicule, ou bien pour faire fonctionner un dispositif électronique distinct du système de dialogue vocal, en particulier, des moyens d'affichage ; et dans lequel :
les moyens de commande sont configurés pour commander les moyens d'actionnement.

8. Procédé permettant de commander un dialogue entre l'homme et la machine, le procédé comprenant les étapes consistant à :
détecter un signal d'entrée de parole représentant un énoncé prononcé par une personne ;
traiter le signal d'entrée de parole détecté de façon à obtenir un signal de parole amélioré ;
analyser le signal d'entrée de parole ou le signal de parole amélioré de façon à délivrer en sortie un signal d'analyse contenant des informations sur : a) un bruit de fond présent dans le signal d'entrée de parole ; et/ou b) une composante d'écho présente dans le signal d'entrée de parole ; et / ou c) la localisation d'une source du signal d'entrée de parole ; et / ou d) le niveau vocal du signal d'entrée de parole ; et / ou e) la hauteur tonale du signal d'entrée de parole ; et / ou f) la stationnarité du signal d'entrée de parole ;
reconnaître le signal de parole amélioré de façon à obtenir un signal de reconnaissance ;
délivrer une sortie de parole synthétisée sur la base du résultat de la reconnaissance, dans lequel :
la délivrance de la sortie de parole synthétisée est commandée sur la base du signal d'analyse ;
**caractérisé en ce que**
le traitement du signal d'entrée de parole détecté est commandé sur la base du résultat de la reconnaissance.

9. Procédé selon la revendication 8, comprenant l'étape consistant à :
déterminer si un niveau de bruit de fond du bruit de fond présent dans le signal de parole dépasse - ou non - un premier seuil prédéterminé ; ou si un niveau d'écho de la composante d'écho présente dans le signal de parole dépasse - ou non - un deuxième seuil prédéterminé ; et dans lequel :
la sortie de parole synthétisée comprend une demande de la personne qui parle, de parler plus fort et / ou plus lentement, si le premier et / ou le deuxième seuil prédéterminé est dépassé.

10. Procédé selon la revendication 8 ou 9, comprenant l'étape consistant à :
déterminer si un niveau de bruit de fond du bruit de fond présent dans le signal de parole dépasse - ou non - un premier seuil prédéterminé ; ou si un niveau d'écho de la composante d'écho présente dans le signal de parole dépasse - ou non - un deuxième seuil prédéterminé ; et dans lequel :
le volume de la sortie de parole synthétisée est augmenté et/ou la rapidité de la sortie de parole synthétisée est réduite, si le premier et / ou le deuxième seuil prédéterminé est dépassé.

11. Procédé selon l'une des revendications 8 à 10, comprenant par ailleurs l'étape consistant à délivrer en sortie un signal de commande vers des moyens de actionnement qui sont configurés pour actionner un élément mécanique, ou bien pour faire fonctionner un dispositif électronique, sur la base du signal de reconnaissance et du signal d'analyse.

12. Procédé selon l'une des revendications 8 à 11, dans lequel le traitement du signal d'entrée de parole destiné à permettre d'obtenir un signal de parole amélioré comprend l'étape consistant à filtrer le signal d'entrée de parole à l'aide de moyens de filtrage et de réduction de bruit et / ou de moyens de filtrage et de compensation d'écho.

13. Procédé selon l'une des revendications 8 à 12, dans lequel le signal d'entrée de parole est formé en faisceau et la localisation de la source du signal d'entrée de parole est obtenue par des moyens de formation de faisceau.

14. Produit programme d'ordinateur, comprenant un ou plusieurs supports lisibles par un ordinateur contenant des instructions exécutables par un ordinateur pour accomplir les étapes du procédé selon l'une des revendications 8 à 13.
